## Europäisches Patentamt
## European Patent Office
## Office européen des brevets

(19)

(11) Numéro de publication: **0 006 667**
**B1**

(12)

# FASCICULE DE BREVET EUROPEEN

(45) Date de publication du fascicule de brevet: **25.11.81**

(51) Int. Cl.³: **A 01 K 11/00, B 21 J 15/04**

(21) Numéro de dépôt: **79200330.3**

(22) Date de dépôt: **21.06.79**

(54) **Pince pour appliquer une marque auriculaire à l'oreille d'un animal.**

(30) Priorité: **27.06.78 BE 2057097**
**12.06.79 BE 2057863**

(43) Date de publication de la demande:
**09.01.80 Bulletin 80/1**

(45) Mention de la délivrance du brevet:
**25.11.81 Bulletin 81/47**

(84) Etats Contractants Désignés:
**DE FR GB NL**

(56) Documents cités:
**CH - A - 266 297**
**DE - A1 - 2 407 641**
**DE - A1 - 2 713 410**
**DE - B - 1 216 007**
**FR - A - 2 185 353**
**FR - A - 2 342 024**
**US - A - 3 359 020**

(73) Titulaire: **MERKO Personen Vennootschap met
Beperkte Aansprakelijkheid
8, Korte Pastoorstraat
B-2600 Berchem (BE)**

(72) Inventeur: **Van Wijk, Antoon
47, Petunialaan
B-2070 Ekeren 2 (BE)**

(74) Mandataire: **Ottelohe, Jozef René
Bureau Ottelohe J.R. Postbus 3 Fruithoflaan 105
B-2600 Antwerpen (Berchem) (BE)**

Courier Press, Leamington Spa, England.

Pince pour appliquer une marque auriculaire à l'oreille d'un animal.

L'invention se rapporte à une pince pour l'application à l'oreille d'un animal d'une marque auriculaire de contrôle ou d'indication d'origine, se compose d'une plaquette métallique pourvue des indications précitées et comportant une ouverture dans laquelle on sertit à l'aide de la pince l'extrémité libre du petit tube d'un élément tubulaire à rebord, après que cet élément tubulaire ait perforé l'oreille de l'animal et que ladite oreille se trouve logée librement entre les deux parties de la marque appliquée. Ainsi qu'il est bien connu, on applique encore entre l'oreille et ledit rebord une petite rondelle élastique. Il n'y a donc pas moyen d'enlever la marque sans endommager l'oreille.

On connaît des pinces à cet effet, dont la mâchoire fixe est pourvue, d'une part, d'une matrice en vue du sertissage de l'extrémité libre du petit tube de l'élément tubulaire et, d'autre part, d'un petit ressort à lame pour maintenir sur cette matrice la plaquette métallique portant les indications. La mâchoire pivotante ou mobile de la pince est pourvue, d'une part, d'une broche à tête arrondie sur laquelle on glisse librement l'élément tubulaire de la marque et, d'autre part, d'un ressort à lame qui presse sur le rebord de l'élément tubulaire afin de maintenir celui-ci. Lorsque, après fermeture de la pince, les deux parties de la marque auriculaire dans la pince ont été réunies et que la mâchoire mobile rejoint de la manière bien connue sa position de repos, la marque auriculaire fermée exercera sur les deux ressorts à lame une traction telle, que ceux-ci se déformeront élastiquement l'un vers l'autre sur une distance relativement grande, jusqu'à environ le centre de l'écartement entre les deux mâchoires et seront maintenus dans cette position.

Le principal inconvénient d'une pince de ce genre est que par suite de leur déplacement relativement grand, les ressorts à lame perdent assez vite leur élasticité et se brisent même facilement. Un autre important inconvénient est que par suite de l'importance force de serrage des ressorts à lame, il n'est pas tellement facile d'arracher la pince de la marque qui a été appliquée sur une oreille. Un autre inconvénient encore est qu'il est possible, par inadvertance, de placer l'élément tubulaire de la marque sur le côté matrice de la pince, au lieu de sur la broche de la pince, et la plaquette de la marque sur ladite broche, ce qui rend pratiquement impossible de réunir les deux parties de la marque. Finalement, un inconvénient majeur consiste encore dans le fait qu'il n'est pas aisé de placer les deux parties de la marque dans la pince et qu'à la longue cette opération devient fatigante lorsqu'un grand nombre d'animaux doit être marqué.

Afin d'éliminer ces inconvénients et conformément à la principale caractéristique de l'invention, la tête de la broche de pince a été rendue élastique dans le sens transversal de manière à exercer un effort de serrage sur la paroi intérieure de l'élément tubulaire afin de maintenir ce dernier sur la broche, alors qu'il est prévu en outre une lamelle rigide suspendue de manière basculante dans la pince, dont une extrémité est pressée sur la matrice de la pince à l'aide d'un petit ressort qui coopère avec ladite lamelle ou pièce analogue.

Ceci permet d'éliminer les ressorts à lame, ce qui résout le problème de la déformation, de l'affaiblissement, de la rupture et du remplacement fréquent des ressorts.

Lorsque, conformément à l'invention, la broche de la pince est pourvue d'un petit ressort avec élasticité dans le sens transversal, afin d'exercer une force de serrage sur la paroi intérieure de l'élément tubulaire et de maintenir ce dernier sur la broche, on obtient l'avantage que ce petit ressort a une durée de vie pratiquement illimitée et que ledit élément tubulaire est maintenu par serrage sur la broche.

La lamelle rigide suspendue de manière basculante dans la pince offre le grand avantage de ne pouvoir être déplacée que sur une distance limitée lors du retrait de la mâchoire mobile de la pince et ne peut ni se déformer ni se briser à la longue, de sorte que la marque fermée se laisse immédiatement retirer de la pince. Un autre avantage important est que les deux parties de la marque auriculaire sont faciles à placer dans la pince sans qu'il ne soit possible de les inverser.

A titre d'exemple et sans le moindre caractère de limitation, il est donné ci-après une description plus détaillée d'une forme d'exécution préférée de la pince conforme à l'invention. Cette description se réfère aux dessins annexés dans lesquels:

la figure 1 représente une vue latérale de la pince;

la figure 2 représente une vue latérale agrandie des mâchoires de la pince, dont certaines parties sont représentées en coupe longitudinale;

la figure 3 représente une coupe selon la ligne III—III à la figure 2;

la figure 4 représente une coupe selon la ligne IV—IV à la figure 3;

la figure 5 est une vue en plan suivant la ligne V—V à la figure 2 d'une des mâchoires de la pince.

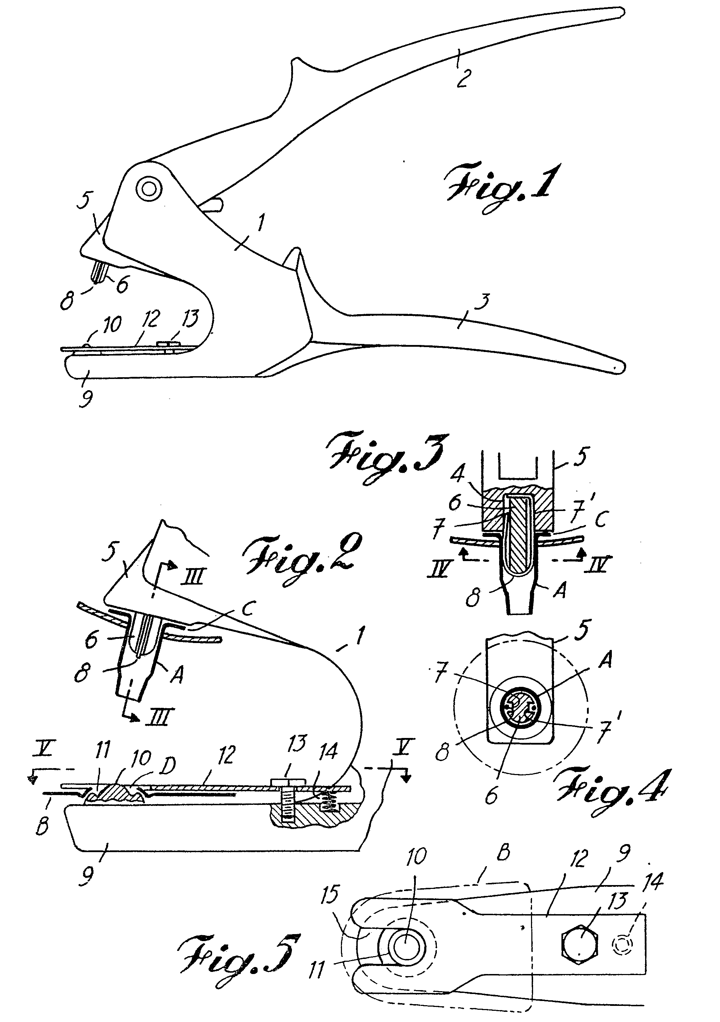

Dans ces figures on reconnaît la pince 1 avec les deux poignées 2—3 à l'aide de laquelle on réunit les deux éléments A et B d'une marque auriculaire de la manière bien connue, après que l'oreille de l'animal qui doit être marqué ait été amenée entre ces éléments et ait été perforée par l'élément tubulaire A. Pour maintenir cet élément tubulaire A de la marque auriculaire dans la pince, on a fixé dans une ouverture cylindrique 4 prévue dans une des mâchoires 5 de la pince, une broche cylindrique 6 à tête arrondie. Cette broche 6 est pourvue de deux rainures longitudinales et diamétralement opposées 7—7', dans lesquelles se trouve introduit avec suffisamment de jeu un petit ressort en épingle à cheveux 8, qui passe par dessus la tête ronde de la broche 6 et dont une extrémité se trouve serrée entre ladite broche et le fond de l'ouverture 4. De cette manière le petit ressort 8 peut être comprimé dans les rainures 7—7'. L'élément tubulaire A avec son rebord circulaire C peut donc être glissé sans difficulté sur la broche 6 avec son petit ressort 8, ce dernier s'appliquant parfaitement en pressant contre la paroi intérieure de l'élément tubulaire A qui se trouve ainsi suffisamment bien maintenu par serrage sur la broche 6. On remarquera que ce petit ressort peut avoir une durée de vie pratiquement illimitée. L'autre mâchoire 9 de la pince est pourvue d'un moyen pour maintenir la plaquette métallique B qui porte les indications de contrôle ou d'origine. Ce dispositif consiste en une matrice 10 avec une gorge annulaire 11 et une lamelle très rigide 12 qui peut basculer autour d'un boulon 13 vissé dans la machoire 9 et dont l'extrémité se situant dans la pince s'appuie contre un petit ressort de pression 14 logé entre ladite extrémité et la mâchoire 9, pressant ainsi l'autre extrémité de la lamelle 12 contre la matrice 10. Cette dernière extrémité est pourvue d'une découpe 15, de sorte que la matrice 10 reste libre. La plaquette B avec ouverture D de la marque auriculaire est pressée entre la matrice 10 et la lamelle de pression 12, de sorte que cette plaquette est maintenue dans la pince. Lorsqu'on applique maintenant une pression sur les poignées 2—3 de la pince 1, la mâchoire 5 se déplace vers l'autre mâchoire 9 de la pince, jusqu'à ce que l'extrémité libre de l'élément tubulaire A est serti par la matrice 10 derrière le bord de l'ouverture D dans la plaquette métallique B, le sertissage s'encastrant dans la plaquette et ne pouvant plus être détaché sans causer de dégâts visibles à la marque auriculaire. Dès que cesse la pression sur les poignées 2—3, la mâchoire 5 revient automatiquement sous l'effet de son ressort, de sorte que la marque auriculaire est détachée de la broche 6 et du petit ressort 8 par la lamelle de pression 12 qui maintient la marque qui vient d'être fermée. Il suffit à présent de retirer la marque auriculaire d'entre la matrice et la lamelle de pression 12. En utilisant une lamelle de pression 12 rigide d'une épaisseur et d'une solidité suffisante, qui se trouve pressée par le petit ressort 14 contre la matrice 10, on évite que cette lamelle ne soit entraînée trop loin et déformée, lors du retrait de la machoire 5, ce qui pourrait à la longue causer le bris de la lamelle, nécessitant son remplacement. Le mouvement basculant de la lamelle de pression 12 se trouve dans ce cas limité du fait que l'extrémité de cette lamelle qui subit la pression du petit ressort de pression 14 vient heurter la mâchoire 9 de la pince 1.

Il est bien évident, qu'au lieu de faire usage d'un petit ressort 8 pour maintenir l'élément tubulaire A sur la broche 6, il est également possible de rendre la broche même élastique en pourvoyant la tête de la broche d'une fente ou de plusieurs fentes dans le sens de l'axe longitudinal de la broche. Il est tout aussi évident, que les pièces constituantes décrites ci-dessus peuvent assumer n'importe quelle forme et n'importe quelles dimensions, à condition de rester dans les revendications de la présente invention.

## Revendications

1. Pince pour l'application d'une marque auriculaire qui consiste au moins, d'une part, d'une plaquette (B) qui comporte des indications de contrôle et une ouverture (D), et d'autre part, d'un élément tubulaire (A), l'oreille de l'animal étant placé entre ladite plaquette (B) et ledit élément tubulaire (A), l'extrémité de l'élément tubulaire (A) étant sertie au moyen de la pince dans l'ouverture (D) de la plaquette (B), de manière qu'il n'y ait plus moyen de séparer ces deux pièces sans les endommager, une matrice (10) étant prévue sur la mâchoire fixe (9) de la pince en vue du sertissage de l'extrémité libre de l'élément tubulaire (A), ainsi qu'une lamelle rigide (12) suspendue de manière basculante dans la pince et dont une extrémité est pressée contre la matrice (10) par un ressort (14) pour maintenir la plaquette métallique (B) portant les indications de contrôle sur la matrice (10), la mâchoire mobile (5) de la pince étant pourvue d'une broche (6) par dessus laquelle on glisse l'élément tubulaire (A) ainsi que d'un moyen pour maintenir ledit élément tubulaire sur ladite broche, caractérisée par le fait que la broche (6) possède des moyens pour procurer une élasticité dans le sens transversal afin d'exercer une pression de serrage sur la paroi interne de l'élément tubulaire (A) et de maintenir ce dernier sur la broche et que la lamelle rigide (12) bascule autour d'un boulon (13) vissé dans la pince.

2. Pince selon la revendication 1, caractérisée par le fait que la broche (6) est pourvue d'au moins un élément élastique (8) qui exerce une pression sur la paroi intérieure de l'élément tubulaire (A) qui se trouve placé dans la pince.

3. Pince selon la revendication 2, caractérisée par le fait que la broche (6) est pourvue de deux rainures longitudinales et diamétralement opposées (7—7') dans lesquelles se trouve logé avec jeu un petit ressort en épingle à cheveux (8) qui passe par dessus la tête de la broche (6) et dont une extrémité se trouve attachée, l'autre extrémité restant libre.

## Claims

1. Tongs for applying auricular markings which consist at least, on the one hand, of a platelet (B) which comprises checking indications and an opening (D), and on the other hand, of a tubular element (A), whereby the ear of the animal is located between aforesaid platelet (B) and aforesaid tubular element (A), the extremity of the tubular element (A) being crimped by means of the tongs in opening (D) of the platelet (B), so that the two parts can no longer be separated without damaging them; a die (10) being provided on the fixed jaw (9) of the tongs for the purpose of crimping the free end of the tubular element (A), as well as a rigid strip (12) suspended in a swinging manner in the tongs and one end of which is pressed against the die (10) by a spring (14) so as to maintain the metal platelet (B), bearing the checking indications, on the die (10), the moving jaw (5) of the tongs being provided with a pin (6) over which the tubular element (A) is slid, as well as a means for maintaining the tubular element on the said pin, characterized by the fact that the pin (6) is provided with means for assuring an elasticity in the transverse sense so as to exert a clamping pressure on the inner wall of the tubular element (A) and to maintain the latter on the pin and that the rigid strip (12) swivels around a bolt (13), which is screwed in the tongs.

2. Tongs according to claim 1, characterized by the fact that the pin (6) is provided with at least one elastic element (8) which exerts pressure on the inner wall of the tubular element (A), which is located in the tongs.

3. Tongs according to claim 2, characterized by the fact that the pin (6) is provided with two longitudinal and diametrically opposite grooves (7—7') in which adapts, with a certain clearance, a small hairpin shaped spring (8) which passes over the head of the pin (6), one end of which is fixed, the other end remaining free.

**Patentansprüche**

1. Viehohrmarkierzange für die Befestigung einer wenigstens aus einem Metallplättchen (B) mit Kontrollanweisungen und mit einer Öffnung (D), einerseits, und einem rohrförmigen Teil (A), anderseits, bestehenden Ohrmarke, wobei das zu markierende Ohr des Tieres zwischen dem vorgenannten Plättchen (B) und dem vorgenannten rohrförmigen Teil (A) befestigt wird und das freie Ende des rohrförmigen Teiles (A) mit der Zange derart in der Öffnung (D) des Plättchens (B) verformt und geklemmt wird, dass es unmöglich ist die beiden derart vereinigten Teile ohne Beschädigung voneinander zu trennen, die feste Zangenbacke (9) eine Matrize (10) für die Befestigung des freien Endes des rohrförmigen Teiles (A) aufweist, und in der Zange eine steife Lamelle (12) schwenkbar aufgehängt ist, wovon das eine Ende durch eine Feder (14) gegen die vorgenannte Matrize (10) gedrückt wird um das vorgenannte Metallplättchen (B) mit den Kontrollanweisungen auf der Matrize (10) zu halten, und wobei die bewegliche Zangenbacke (5) mit einem Stift (6), worauf der vorgenannte rohrförmige Teil (A) geschoben wird, und mit einem Mittel für das Festhalten dieses rohrförmigen Teiles (A) auf dem betreffenden Stift (6) versehen ist, dadurch gekennzeichnetn dass der vorgenannte Stift (6) mit den erforderlichen querelastischen Mitteln für das Ausüben eines Klemmdruckes auf der Innenwand des rohrförmigen Teiles (A) um diesen auf ihm zu halten versehen ist, und dass die vorgenannte steife Lamelle (12) schwenkbar um einen in der Zange festgeschraubten Bolzen (13) angeordnet ist.

2. Zange gemäss dem Anspruch 1, dadurch gekennzeichnet, dass der vorgenannte Stift (6) wenigstens einen elastischen Teil (8) aufweist, wodurch ein Druck auf der Innenwand des in der Zange angeordneten rohrförmigen Teiles (A) ausgeübt wird.

3. Zange gemäss dem Anspruch 1, dadurch gekennzeichnet, dass der vorgenannte Stift (6) zwei diametral gegenüberstehende Längsrillen (7—7') aufweist, worin mit Spiel eine kleine, sich über den Kopf des Stiftes (6) erstreckende haarnadelförmige Feder (8), wovon das eine Ende befestigt und das andere Ende frei ist, angeordnet ist.

Fig.1

Fig.3

Fig.2

Fig.4

Fig.5